Europäisches Patentamt

European Patent Office

Office européen des brevets

(11) Numéro de publication: **0 451 659 A1**

## DEMANDE DE BREVET EUROPEEN

(21) Numéro de dépôt: **91105130.8**

(22) Date de dépôt: **30.03.91**

(51) Int. Cl.⁵: **F26B 17/28, A23L 3/48**

(30) Priorité: **10.04.90 CH 1221/90**

(43) Date de publication de la demande:
**16.10.91 Bulletin 91/42**

(84) Etats contractants désignés:
**AT BE CH DE DK ES FR GB GR IT LI LU NL SE**

(71) Demandeur: **SOCIETE DES PRODUITS NESTLE S.A.**
**Case postale 353**
**CH-1800 Vevey(CH)**

(72) Inventeur: **Badertscher, Ernest**
**Ch. de Champ Bornu 7**
**CH-1350 Orbe(CH)**
Inventeur: **Bernard, Gérald**
**5, Av. Carrard Foligny**
**CH-1350 Orbe(CH)**
Inventeur: **Duc, Héribert**
**Penchèvre 19**
**CH-1350 Orbe(CH)**

(54) **Procédé et dispositif pour le séchage de matières pâteuses alimentaires.**

(57) Une matière alimentaire pâteuse est répartie à une partie supérieure d'un cylindre sécheur 1,2 mobile en rotation, le mélange adhérant à la surface externe dudit cylindre. Le film est décollé du cylindre sécheur, après plusieurs tours de celui-ci, par un dispositif constitué d'un racleur 6 commandé par une capteur 10 mesurant la rotation du cylindre sécheur.

Application à la production de flocons de céréales épais.

Fig.1

La présente invention est relative à un procédé et un dispositif pour le séchage de matières pâteuses alimentaires.

La présente invention a plus particulièrement pour objet un procédé pour la production de flocons de céréales épais ainsi qu'un dispositif pour la mise en oeuvre de ce procédé.

On connaît, par exemple par le document GB 1,230,105, un procédé et un dispositif dans lesquels un mélange humide est séché à l'état de pellicule par application de ce mélange sur la surface externe chauffée d'un cylindre animé d'un mouvement de rotation.

Selon cette invention, le matériau séché ayant naturellement tendance à s'enrouler sur lui-même, il est possible, en détachant la pellicule de la surface du cylindre, d'obtenir un produit présentant une épaisseur désirée pourvu qu'elle soit inférieure à 1,3 mm.

Mais, en premier lieu, une telle invention ne peut être utilisée pour la réalisation de produits de plusieurs millimètres d'épaisseur, et, en second lieu, il est indispensable que le matériau ait une tendance marquée à s'enrouler sur lui-même.

La présente invention a donc pour but de résoudre ces problèmes en permettant de réaliser des flocons de céréales de toutes épaisseurs et cela indépendamment de la composition du produit fabriqué.

La présente invention a donc pour objet procédé de séchage de matières pâteuses alimentaires dans lequel une matière pâteuse est répartie à une partie supérieure d'un cylindre sécheur mobile en rotation autour de son axe, le mélange adhérant à une surface externe du dit cylindre en formant un film, caractérisé en ce que le film est décollé du cylindre sécheur après N tours de celui-ci, N étant supérieur ou égal à 2, en formant ainsi un produit multicouches constitué d'au moins deux épaisseurs de film.

La présente invention a aussi pour objet un dispositif pour la mise en oeuvre du procédé selon l'invention dans lequel un cylindre sécheur mobile en rotation autour de son axe est alimenté par un bourbier, le film formé étant ôté par un racleur, caractérisé en ce que les mouvements du racleur sont commandés par un capteur mesurant la rotation du cylindre sécheur.

Les autres caractéristiques et avantages ressortiront à la suite de la description qui va suivre faite en référence aux dessins annexes donnés uniquement à titre d'exemple non limitatif et parmi lesquels :

La Fig. 1 est une vue schématique du dispositif de séchage selon l'invention,

Les Fig. 2.a à 2.e sont des vues schématiques illustrant les différentes phases du procédé selon l'invention.

La Fig. 3 est une variante du dispositif selon la Fig. 1.

Selon un procédé connu, les diverses matières premières, qui vont constituer la matière pâteuse alimentaire, sont mélangées et additionnées d'eau. La quantité d'eau est réduite au minimum tout en permettant à la fois le pompage et la pasteurisation du mélange. Ainsi, la teneur en poids de matières sèches est supérieure à 50% préférentiellement voisine de 55%.

Diverses compositions peuvent être utilisées selon la destination finale du produit, ainsi, par exemple, la matière sèche, avant l'addition d'eau, peut avoir la composition suivante :

| | |
|---|---|
| Farine de blé | 55,9% |
| Saccharose | 30,0% |
| Lait écrémé | 10,0% |
| Béta-Carotène | 0,1% |
| Humidité | 4,0% |

D'autres compositions, par exemple à base de produits féculents, telles que des purées de pommes de terre peuvent aussi être utilisées, ainsi que d'autres compositions de céréales.

A la suite de cela, la matière pâteuse constituée est, selon un procédé connu, pasteurisée.

C'est une fois cette pasteurisation réalisée que le procédé selon la présente invention est mis en oeuvre.

La matière pâteuse est répartie à la partie supérieure d'un cylindre sécheur de type connu mobile autour de son axe horizontal, en adhérant à la surface externe du dit cylindre en formant un film.

Selon la caractéristique principale du procédé selon l'invention, le film se dépose sur plusieurs épaisseurs à la surface externe du cylindre en formant ainsi un produit multicouches constitué d'au moins deux épaisseurs de film.

Il est ainsi possible, en jouant sur l'épaisseur du film et sur le nombre de couches, d'obtenir un produit de grande épaisseur.

Une fois que le produit a atteint l'épaisseur désirée, il est décollé du cylindre sécheur.

Pendant cette opération de décollement, le cylindre sécheur poursuit sa rotation, la film monocouche continuant donc de se déposer à la surface du cylindre ainsi libérée.

Une fois que le produit multicouches a été totalement décollé l'opération de décollement s'arrête et un nouveau cycle peut alors commencer au cours duquel un produit multicouches va être formé qui sera décollé du cylindre lorsqu'il aura atteint l'épaisseur voulue.

Il va maintenant être décrit le dispositif pour la mise en oeuvre du procédé selon l'invention.

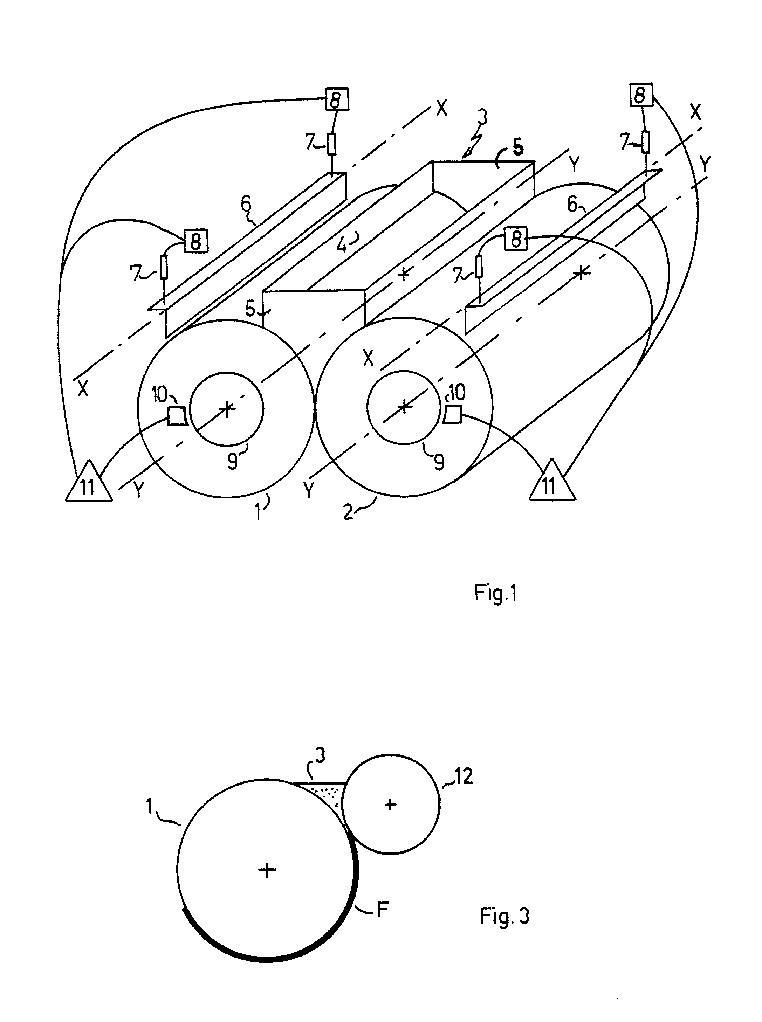

Selon le mode de réalisation préférentielle de l'invention représenté Fig. 1, deux cylindres sécheurs 1 et 2 parallèles situés dans le même plan horizontal sont montés mobiles en rotation avec des sens de rotation opposés et se touchent avec une force déterminée selon une génératrice commune aux deux cylindres. Les sens de rotation des deux cylindres convergent de la partie supérieure des dits cylindres vers leur génératrice de contact.

Selon un dispositif connu, chaque cylindre sécheur est chauffé, par un dispositif non représenté, à une température permettant la déhydratation de la matière pâteuse alimentaire à traiter.

Un bourbier 3, alimenté en matière pâteuse pasteurisée par un dispositif non représenté, est situé au-dessus des deux rouleaux sécheurs 1 et 2 au droit de leur génératrice de contact.

Ce bourbier 3 est constitué de deux parois latérales 4, s'étendant sur toute la longueur des cylindres sécheurs 1 et 2, et de deux joues 5 limitant le bourbier 3 aux extrémités des parois latérales 4.

Un racleur 6 est prévu à la partie supérieure de chaque cylindre sécheur 1,2, à l'extérieur du bourbier 3, chaque racleur 6 s'étendant sur la totalité de la longueur du cylindre sécheur 1,2 qui lui fait face. Chaque racleur 6 est monté mobile en rotation, autour d'un axe x-x parallèle à l'axe y-y du cylindre 1,2 auquel il est associé, grâce à un dispositif de commande relié à un détecteur de fin de course non représenté qui limite la course de chaque racleur 6.

Chaque racleur 6 est commandé par deux vérins 7, chaque vérin 7 étant actionné par une électrovanne 8.

Chaque cylindre sécheur 1,2 est muni de moyens permettant de déterminer sa rotation.

Selon un mode de réalisation préférentiel de l'invention ces moyens sont constitués d'une roue dentée 9 qui, reliée à un capteur 10 inductif et à un compteur d'impulsions 11, fournit un nombre déterminé d'impulsions par tour de cylindre, par exemple cent, au compteur d'impulsions 11.

Comme on le voit Fig. 1, la roue dentée 9 est solidaire du cylindre sécheur 1,2, alors que le capteur inductif 10 est indépendant du cylindre sécheur 1,2.

Il va maintenant être décrit le fonctionnement du dispositif selon l'invention.

La matière pâteuse, située dans le bourbier 3, se dépose, sous forme d'un film F, sur chacun des cylindres sécheurs 1,2, chaque film F étant comprimé par les deux cylindres sécheurs à la génératrice de contact entre les dits cylindres. Les racleurs 6 sont alors en position relevée.

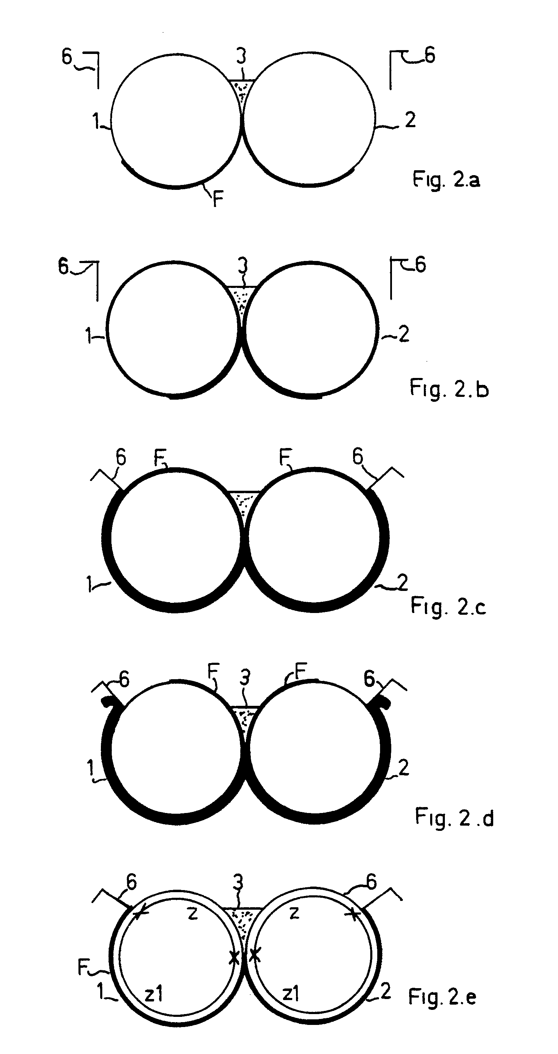

Le film monocouche F commence à se déposer sur le cylindre sécheur 1,2 (Fig. 2.a). Une fois que le cylindre sécheur 1,2 a effectué un tour complet, le film monocouche F s'est refermé sur lui-même et une deuxième couche va pouvoir être déposée (Fig. 2.b).

Quand, à la génératrice du cylindre sécheur 1,2 correspondant à la ligne d'impact du racleur 6, le produit multicouches a l'épaisseur suffisante voulue, les électrovannes 8 des vérins 7 sont activées provoquant ainsi l'abaissement du racleur 6 à la surface du cylindre sécheur 1,2 (Fig. 2.c).

Le cylindre sécheur 1,2 poursuivant sa rotation, le produit multicouches est décollé de la surface externe du dit cylindre alors que le film monocouche continue de se déposer sur la couche précédente (Fig. 2.d), une zone apparaissant par ailleurs à la surface externe du cylindre sécheur 1,2 où le film monocouche ne s'est pas encore déposé après le racleur 6.

Le cylindre sécheur 1,2 poursuit sa rotation et, lorsque la totalité du produit multicouches a été ôtée (Fig. 2.e), les électrovannes 9 sont alors excitées de nouveau entraînant cette fois le relèvement du racleur 6.

On voit donc (Fig. 2.e), que, à la fin du premier cycle de production, il existe, à la surface des cylindres sécheurs 1,2, une zone Z où il n'existe pas de film déposé, c'est la zone Z comprise, dans le sens de rotation du cylindre sécheur, entre la génératrice de contact entre le racleur 6 et le cylindre sécheur 1,2 et la génératrice de contact entre les deux cylindres sécheurs 1 et 2.

Sur une zone 21 du cylindre sécheur 1,2, complémentaire de la zone Z, un film monocouche a été déposé. D'une façon générale, à la fin du premier cycle de production et quel que soit le nombre de couches du produit multicouches, la zone Z1 présente toujours une couche unique.

A partir de ce stade, le dispositif peut effectivement fonctionner automatiquement.

Au début d'un cycle, le compteur d'impulsions 11 est à la valeur zéro.

3

Soit P1 le nombre d'impulsions, fournies par le capteur inductif 10 par l'intermédiaire de la roue dentée 9 du cylindre sécheur 1,2, nécessaires pour que la zone Z1 passe d'une couche à N couches à hauteur du racleur 6. Cette valeur de consigne correspond donc à un nombre de tours que le cylindre sécheur doit effectuer pour que le produit multicouches commence à être décollé.

Soit P2 - P1 le nombre d'impulsions, fournies par la roue dentée 9, correspondant au temps nécessaire au décollement de produit multicouches de N couches.

Soit S le signal déterminant la rotation du cylindre sécheur 1,2 et correspondant au nombre d'impulsions enregistrées par le compteur d'impulsions 11. Le cylindre sécheur 1,2 tournant, le film F se dépose donc en premier sur la zone Z, puis, le film F s'étant refermé sur lui-même au niveau de la zone 21, une nouvelle couche peut être déposée.

Quand le signal S atteint la valeur P1, le racleur 6 s'abaisse par les vérins 7 et les électrovannes 8, le produit de N couches étant décollé.

Le cylindre sécheur 1,2 poursuivant sa rotation, le signal S atteint la valeur P2, le racleur 6 est alors relevé, sa position haute étant déterminée par le détecteur de fin de course.

Un nouveau cycle peut alors commencer, le compteur d'impulsions 11 ayant été remis à Zéro.

Selon une variante du dispositif selon l'invention, le système de séchage peut être constitué, comme illustré à la Fig. 3, d'un cylindre sécheur unique 1, chauffé, le film F étant réalisé par un cylindre satellite 12, de plus faible rayon, et non chauffé.

Quel que soit le dispositif de séchage choisi, à un seul cylindre sécheur ou à deux cylindres sécheurs, les flocons obtenus lors du décollement du produit multicouches sont ensuite tamisés.

Après ce tamisage, les flocons peuvent être enrobés par exemple par un sirop à base de saccharose, puis ils sont soumis à un séchage final fonction de l'enrobage choisi avant d'être conditionnés.

## Revendications

1. Procédé de séchage de matières pâteuses alimentaires dans lequel une matière pâteuse est répartie à une partie supérieure d'un cylindre sécheur mobile en rotation autour de son axe, le mélange adhérant à une surface externe du dit cylindre en formant un film, caractérisé en ce que le film est décollé du cylindre sécheur après N tours de celui-ci, N étant supérieur ou égal à 2, en formant ainsi un produit multicouches constitué d'au moins deux épaisseurs de film.

2. Procédé selon la revendication 1, caractérisé en ce que pendant le décollement du produit multicouches de la surface du cylindre, ledit cylindre continue de tourner, un film monocouche se déposant à la surface du cylindre ainsi libérée en continuité avec le produit multicouches.

3. Procédé selon l'une des revendications précédentes caractérisé en ce qu'un signal (S), correspondant à la rotation du cylindre, est comparé à une première valeur de consigne (P1), correspondant au nombre de tours du cylindre à partir duquel le produit multicouches doit être décollé, et, quand le signal (S) atteint la première valeur de consigne (P1), des moyens de décollement du produit multicouches sont actionnés, jusqu'à ce que le signal (S) atteigne une seconde valeur de consigne (P2), correspondant à la fin du décollement du produit multicouches.

4. Dispositif pour la mise en oeuvre du procédé selon l'une des revendications précédentes dans lequel un cylindre sécheur (1,2) mobile en rotation autour de son axe est alimenté par un bourbier, le film formé étant ôté par un racleur (6), caractérisé en ce que les mouvements du racleur (6) sont commandés par un capteur (10) mesurant la rotation du cylindre sécheur (1,2).

5. Dispositif selon la revendication 4 caractérisé en ce que le capteur (10) est un capteur inductif relié à une roue dentée (9) du cylindre sécheur (1,2).

6. Dispositif selon l'une des revendications 4 ou 5 caractérisé en ce que le racleur (6) est commandé par au moins un vérin (7) actionné par une électrovanne (8).

Fig.1

Fig. 3

Fig. 2.a

Fig. 2.b

Fig. 2.c

Fig. 2.d

Fig. 2.e

# RAPPORT DE RECHERCHE EUROPEENNE

Numéro de la demande

**EP 91 10 5130**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | US-A-4 140 803   (PANCHUK ET AL)<br>* le document en entier *<br>– – – | 1,2,4,6 | F 26 B 17/28<br>A 23 L 3/48 |
| Y | DE-A-1 629 015   (N.V. GOUDSCHE MASCHINEFABRIEK)<br>* le document en entier *<br>– – – – – | 6 | |

| DOMAINES TECHNIQUES RECHERCHES (Int. Cl.5) |
|---|
| F 26 B<br>A 23 L<br>A 23 C<br>A 23 B |

Le présent rapport de recherche a été établi pour toutes les revendications

| Lieu de la recherche | Date d'achèvement de la recherche | Examinateur |
|---|---|---|
| La Haye | 11 juillet 91 | SILVIS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&  : membre de la même famille, document correspondant